# EUROPÄISCHE PATENTANMELDUNG

(11) **EP 0 689 041 A1**
(43) Veröffentlichungstag der Anmeldung: **27.12.1995**
(21) Anmeldenummer: 95890117.5
(22) Anmeldetag: 23.06.1995
(51) Int. Cl.: G01K 1/02

(54) **Tiefkühltruhe od. dgl.**

(30) Priorität: 23.06.1994 AT 1239/94
(71) Anmelder: AUSTRIA HAUSTECHNIK AKTIENGESELLSCHAFT, A-8786 Rottenmann (AT)
(72) Erfinder: Plank, Karl, A-8786 Rottenmann (AT)
(74) Vertreter: Hübscher, Heiner, Dipl.-Ing.

(57) **Zusammenfassung**

Eine Tiefkühltruhe ist mit einer einen Temperaturfühler (2) und eine Temperaturanzeige (3) aufweisenden Temperaturmeßeinrichtung (1) ausgestattet.

Um die Kühlverhältnisse überwachen zu können, umfaßt die Temperaturmeßeinrichtung (1) einen eingangsseitig an den Temperaturfühler (2) und ausgangsseitig an die Temperaturanzeige (3) angeschlossenen Rechner (4), der den Temperaturfühlereingang periodisch abfragt und die dabei registrierten Meßdaten speichert und der Temperaturanzeige (3) im Sinne einer Darstellung des sich über einen bestimmten Zeitraum erstrekkenden Temperaturverlaufes ansteuert.

## Beschreibung

Die Erfindung bezieht sich auf eine Tiefkühltruhe od. dgl. mit einer einen Temperaturfühler im Truheninneren und eine Temperaturanzeige im Bereich der Truhenöffnung aufweisenden Temperaturmeßeinrichtung.

Die Qualität einer Tiefkühlware hängt von der Kontinuität der Kühlkette ab, wobei vor allem auch die Einhaltung einer bestimmten Lagertemperatur in den Tiefkühltruhen, Verkaufsvitrinen u. dgl. beim Warenangebot von entscheidender Bedeutung ist. Zur Kontrolle der Kühltemperatur innerhalb der Tiefkühltruhen u. dgl. gibt es Meßeinrichtungen, die die Augenblickstemperatur im Truheninneren erfassen und anzeigen, womit sich aber eine Überschreitung der vorgeschriebenen Lagertemperatur und damit eine Unterbrechung der Kühlkette im allgemeinen nicht feststellen lassen. Außerdem wurde zur Überwachung des Kühlzustandes von Tiefkühlware schon vorgeschlagen, die Ware selbst mit temperaturempfindlichen Kontrollkapseln od. dgl. auszustatten, die das Überschreiten einer bestimmten Grenztemperatur anzeigen, doch ist diese Überwachung an eine spezielle Warenausstattung gebunden und damit sehr aufwendig.

Der Erfindung liegt daher die Aufgabe zugrunde, diese Mängel zu beseitigen und eine Tiefkühltruhe der eingangs geschilderten Art zu schaffen, die auf einfache und rationelle Weise auch für den Endverbraucher eine Kontrolle der Kühlverhältnisse dieser Truhe und so eine einfache Selbstüberwachung der Kühlbedingungen bei der Warenlagerung erlaubt.

Die Erfindung löst diese Aufgabe dadurch, daß die Temperaturmeßeinrichtung einen eingangsseitig an den Temperaturfühler und ausgangsseitig an die Temperaturanzeige angeschlossenen Rechner umfaßt, der den Temperaturfühlereingang periodisch abfragt und die dabei registrierten Meßdaten speichert und der die Temperaturanzeige im Sinne einer Darstellung des sich über einen bestimmten Zeitraum erstreckenden Temperaturverlaufes ansteuert. Durch die Darstellung des Temperaturverlaufes über einen entsprechend langen Zeitraum läßt sich nun mit einem Blick feststellen, ob zu einem beliebigen Zeitpunkt innerhalb dieses Zeitraumes die Temperatur die für das Einhalten der Kühlkette erforderlichen Werte überschritten hat, und macht so einen Fehler der Lagerhaltung deutlich. Der Temperaturfühler wird an einer geeigneten Stelle im Truheninneren, vorzugsweise in Höhe der zulässigen Stapelgrenze, angeordnet, um die kritische Temperatur erfassen zu können, und gibt durch die periodische Abfrage die Möglichkeit eines genauen Überblicks über die Temperaturverhältnisse in der Truhe während eines vorbestimmten Lagerzeitraumes. Die eigentliche Art der Darstellung des Temperaturverlaufes spielt keine Rolle, wichtig ist allein, daß die Temperaturentwicklung über die jeweilige Lagerzeit der Tiefkühlware deutlich für den Endverbraucher und selbstverständlich auch für das Verkaufspersonal u. dgl. erkennbar wird. Durch den Einsatz eines Rechners ist es dabei schwierigkeitslos möglich, über geeignete Schnittstellen die Meßdaten weiterzugeben und in einer Überwachungsstation zu archivieren, über einen Drucker auszudrucken u.dgl.

Um ein genaueres Bild über die vorhandenen Temperaturen und dennoch einen anschaulichen Temperaturverlauf zu erhalten, kann der Rechner jeweils mehrere Meßdaten mitteln und diese Mittelwerte der Temperaturverlaufsdarstellung zugrundelegen, so daß die Temperaturfühlereingangsabfrage in sehr kurzen Perioden erfolgen kann und damit auch eine entsprechend große Auflösung der Temperaturwerte sichergestellt wird.

Zweckmäßigerweise fragt der Rechner den Temperaturfühlereingang alle 5 sec. ab, mittelt die dabei registrierten Meßdaten stundenweise und stellt sie zu einem sich über mehrere Tage, beispielsweise 10 Tage, erstreckenden Temperaturverlauf zusammen, so daß bei der Temperaturverlaufsdarstellung bei einem mehrtägigen Überblick die Temperaturwerte in Stundenabständen angezeigt werden, was eine sehr praxisgerechte Kühltruhenüberwachung erlaubt.

An sich gibt es bei der Temperaturverlaufsdarstellung keinerlei Beschränkung, wobei sich allerdings zwei Darstellungsvarianten als besonders zweckmäßig erwiesen haben. Einmal ist ein sich über mehrere Tage erstreckender Temperaturverlauf in einem alle Tage erfassenden Bild darstellbar und das andere Mal ein sich über mehrere Tage erstreckender Temperaturverlauf in einzeln abrufbaren, aufeinanderfolgenden Tagen zugeordneten Bildern. Dadurch ist es möglich, den Temperaturverlauf des gesamten Überwachungszeitraumes einheitlich anzuzeigen und den Temperaturverlauf daher auch mit einem Blick zu kontrollieren oder den Temperaturverlauf dieses Überwachungszeitraumes tageweise anzuzeigen und zu überwachen.

Um den Beginn eines Überwachungszeitraumes einfach festlegen zu können, bricht ein Beenden des Kühlbetriebes die Temperaturverlaufsdarstellung ab und startet ein Beginn des Kühlbetriebes die Temperaturverlaufsdarstellung, wobei in der Temperaturanzeige dieser Startzeitpunkt markierbar ist. Wird die Kühltruhe neu befüllt, was nach einer Reinigung oder bei der Erstinbetriebnahme erfolgt, wird die Temperaturverlaufsdarstellung neu begonnen, da ja mit der Neubefüllung auch ein neuer Kühlbetrieb anfängt. Durch die Anzeige dieses Startzeitpunktes weiß der Endverbraucher, ab wann der jeweilige Kühlbetrieb läuft und warum daher am Anfang nicht der gesamte Überwachungszeitraum angezeigt wird, so daß auch innerhalb der Anfangsphase des Betriebes eine ordnungsgemäße und einsichtige Temperaturkontrolle vorgenommen werden kann. Wird der Kühlbetrieb unterbrochen, was beispielsweise beim Reinigen der Truhe und dem dazu erforderlichen Entleeren der Truhe der Fall ist, wird die Temperaturverlaufsdarstellung beendet, um nicht zu Fehlanzeigen zu kommen. Ein Starten des Kühlbetriebes ist dann wiederum ein Neubeginn für die Temperaturverlaufsdarstellung.

Ist in der Temperaturverlaufsdarstellung eine Kühlgrenztemperatur hervorgehoben, kann die Überwachung der einzuhaltenden Temperaturen erleichtert werden, da ein Übersteigen dieser Kühlgrenztemperatur entsprechend verdeutlicht wird und dem Betrachter sofort auffällt.

In der Zeichnung ist der Erfindungsgegenstand rein schematisch veranschaulicht, und zwar zeigen
- Fig. 1: eine Temperaturmeßeinrichtung für eine erfindungsgemäße Tiefkühltruhe im Blockschaltbild und
- Fig. 2: die Temperaturanzeige dieser Temperaturmeßeinrichtung in schematischer Draufsicht.

Um auf einfache Weise die Lagerungsbedingungen einer Tiefkühltruhe od. dgl. überwachen zu können, wird über eine Temperaturmeßeinrichtung 1 der sich über einen bestimmten Zeitraum erstreckende Temperaturverlauf der Truheninnentemperatur aufgezeichnet und angezeigt. Die Temperaturmeßeinrichtung 1 weist dabei einen im Truheninneren angeordneten Temperaturfühler 2 und eine gut sichtbar im Bereich der Truhenöffnung angeordnete Temperaturanzeige 3 sowie einen eingangsseitig an den Temperaturfühler 2 und ausgangsseitig an die Temperaturanzeige 3 angeschlossenen Rechner 4 auf. Der Rechner 4 umfaßt einen Einplatinen-Computer 5 zur Verarbeitung der über den Temperaturfühler 2 eingelesenen Meßdaten und eine Ausgabeeinheit 6 zur Ansteuerung der Temperaturanzeige 3 entsprechend der Ausgabeinformationen des Einplatinen-Computers 5. Ein Netzgerät 7 sorgt für die Stromversorgung von Rechner und Temperaturanzeige.

Der Rechner 4 fragt kurzperiodisch den Eingang vom Temperaturfühler 2 her ab, beispielsweise alle fünf sec., und registriert und speichert die abgefragten Meßdaten. Diese werden über mehrere Perioden, beispielsweise über eine Stunde, gemittelt und die Mittelwerte im Sinne eines sich über einen mehrtägigen Zeitraum, beispielsweise einen Zeitraum von zehn Tagen, erstreckenden Temperaturverlaufes in der Temperaturanzeige 3 angezeigt.

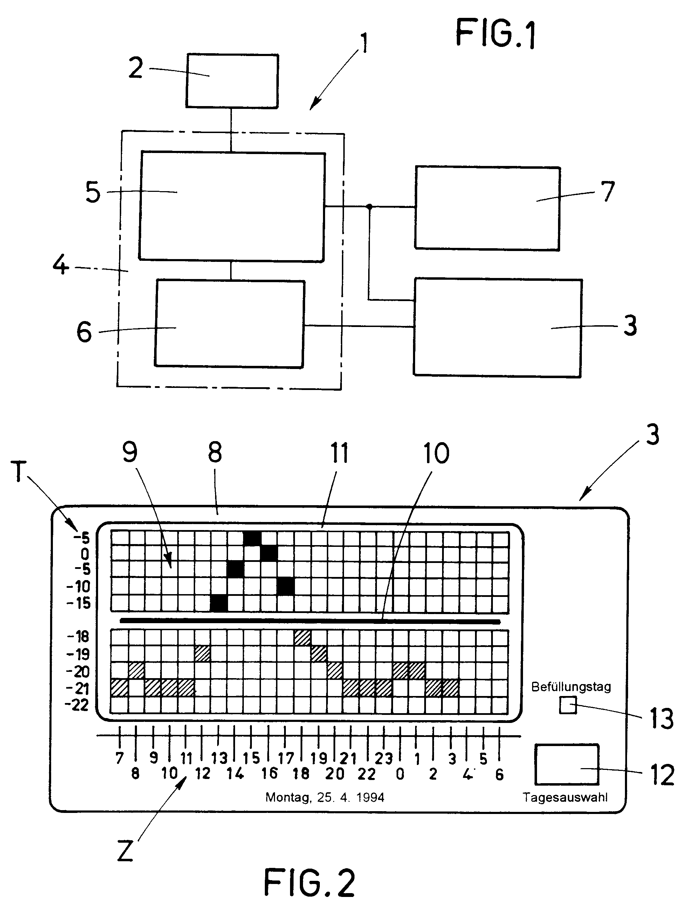

Wie in Fig. 2 angedeutet, besteht die Temperaturanzeige 3 aus einem Meßwertedisplay 8 mit einer LCD-Anzeige oder mit LED-Arrays 9. Die einzelnen Lichtpunktreihen geben dabei entsprechend gestufte Temperaturwerte T und die Lichtpunktspalten die Stunden einer Zeitskala Z an und ein Grenzbalken 10 markiert eine Kühlgrenztemperatur. Zur Verdeutlichung der oberhalb oder unterhalb dieser Markierung liegenden Temperaturwerte werden die oberen, im Schlechtbereich liegenden Werte mit roten Lichtpunkten und die unten, im Gutbereich liegenden Temperaturwerte mit grünen Lichtpunkten angezeigt.

Im dargestellten Ausführungsbeispiel umfaßt das Anzeigefeld 11 des Meßwertedisplays 8 den Zeitraum eines Tages, wobei durch einen Taster 12 die angezeigten Tage geblättert werden können, um so den ganzen Überwachungszeitraum abzulesen. Es wäre auch möglich, bei entsprechend breitem Anzeigefeld 11 alle Tage eines Überwachungszeitraumes auf einmal anzuzeigen, was dann bei geringerer Auflösung einen Gesamtüberblick bietet.

Ein Kontrollicht 13 leuchtet bei der Anzeige eines Erstbefüllungstages auf, so daß dem Betrachter der Beginn der Überwachung deutlich gemacht werden kann.

Wie mit den dunklen Lichtpunkten angedeutet, wäre bei der dargestellten Anzeige sofort merkbar, daß die Kühltemperatur innerhalb der Kühltruhe am Montag, 25. 4. 1994, in der Zeit von 13 bis 17 Uhr die zulässige Kühlgrenztemperatur überschritten hat und daher die Kühlkette unterbrochen war.

Leuchtet das Kontrollicht 13 auf, weiß der Betrachter, daß der angezeigte Tag der erste Tag einer Neubefüllung ist und daß daher der Überwachungszeitraum von diesem Tag an beginnt. Eine Kontrolle der vorhergehenden Tage wird dadurch nicht mehr möglich.

Selbstverständlich können darüber hinaus Rechner und Temperaturanzeige mit den verschiedensten zusätzlichen Bedien- und Bearbeitungseinrichtungen, wie Rückstelltaster, Langzeitspeicher, Drucker u. dgl. ausgestattet sein und auch weitere, über die Temperaturüberwachung hinausgehende Aufgaben erfüllen.

## Patentansprüche

1. Tiefkühltruhe od. dgl. mit einer einen Temperaturfühler (2) im Truheninneren und eine Temperaturanzeige (3) im Bereich der Truhenöffnung aufweisenden Temperaturmeßeinrichtung (1), dadurch gekennzeichnet, daß die Temperaturmeßeinrichtung (1) einen eingangsseitig an den Temperaturfühler (2) und ausgangsseitig an die Temperaturanzeige (3) angeschlossenen Rechner (4) umfaßt, der den Temperaturfühlereingang periodisch abfragt und die dabei registrierten Meßdaten speichert, und der die Temperaturanzeige (3) im Sinne einer Darstellung des sich über einen bestimmten Zeitraum erstreckenden Temperaturverlaufes ansteuert.

2. Tiefkühltruhe nach Anspruch 1, dadurch gekennzeichnet, daß der Rechner (4) jeweils mehrere Meßdaten mittelt und diese Mittelwerte der Temperaturverlaufsdarstellung zugrundelegt.

3. Tiefkühltruhe nach Anspruch 2, dadurch gekennzeichnet, daß der Rechner (4) den Temperaturfühlereingang alle 5 sec. abfragt, die dabei registrierten Meßdaten stundenweise mittelt und zu einem sich über mehrere Tage, beispielsweise 10 Tage, erstreckenden Temperaturverlauf zusammenstellt.

4. Tiefkühltruhe nach einem der Ansprüche 1 bis 3, dadurch gekennzeichnet, daß ein sich über mehrere Tage erstreckender Temperaturverlauf in einem alle Tage erfassenden Bild darstellbar ist.

5. Tiefkühltruhe nach einem der Ansprüche 1 bis 3, dadurch gekennzeichnet, daß ein sich über mehrere Tage erstreckender Temperaturverlauf in einzeln abrufbaren, aufeinanderfolgenden Tagen zugeordneten Bildern darstellbar ist.

6. Tiefkühltruhe nach einem der Ansprüche 1 bis 5, dadurch gekennzeichnet, daß ein Beenden des Kühlbetriebes die Temperaturverlaufsdarstellung abbricht und ein Beginn des Kühlbetriebes die Temperaturverlaufsdarstellung startet, wobei in der Temperaturanzeige (3) dieser Startzeitpunkt markierbar ist.

7. Tiefkühltruhe nach einem der Ansprüche 1 bis 6, dadurch gekennzeichnet, daß in der Temperaturverlaufsdarstellung eine Kühlgrenztemperatur hervorgehoben ist.
